# EUROPÄISCHE PATENTSCHRIFT

(11) **EP 2 363 321 B1**
(45) Veröffentlichungstag und Bekanntmachung des Hinweises auf die Patenterteilung: **28.08.2013**
(21) Anmeldenummer: 11400013.6
(22) Anmeldetag: 26.02.2011
(51) Int. Cl.: B60R 9/06, B60R 9/10

(54) **Lastenträger mit einem mit mehreren Bewegungsfreiheitgraden beweglichen Erweiterungsbauteil**
Load carrier with a functional support
Support de charges avec un support fonctionnel

(30) Priorität: 03.03.2010 DE 102010010243; 30.11.2010 DE 102010052773
(43) Veröffentlichungstag der Anmeldung: 07.09.2011
(60) Teilanmeldung: 13003419.2
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 33449 Langenberg (DE)
(74) Vertreter: Bregenzer, Michael

(56) Entgegenhaltungen:
- EP-A1- 2 080 671
- EP-A2- 1 876 060
- DE-A1- 10 257 903
- DE-A1-102004 021 709
- DE-A1-102008 012 689
- US-A1- 2005 116 002
- US-A1- 2007 102 465

## Beschreibung

Die Erfindung betrifft einen Lastenträger für ein Fahrzeug, insbesondere für ein Personen-Kraftfahrzeug, mit einem an einem Heck des Fahrzeugs befestigbaren oder anordenbaren Grundträger zum Tragen einer Last, gemäß dem Oberbegriff des Anspruchs 1.

Ein derartiger Lastenträger ist beispielsweise aus gattunsgemäβer US 2007/0102465 A1 bekannt.

Ein weiterer Lastenträger ist beispielsweise aus DE 10 2008 012 689 A1 bekannt. Der Lastenträger kann quasi zusammen gefaltet werden, damit er in der Staustellung wenig Platz benötigt, beispielsweise zur Verpackung in einer Tasche. In der Gebrauchsstellung des Lastenträgers sind die Erweiterungsbauteile, zum Beispiel Leuchten, Rinnen zum Abstellen von Fahrrädern oder dergleichen von dem Grundträger oder dem Lastenaufsatz abgeklappt oder ausgeschwenkt. Insbesondere dann, wenn ein Erweiterungsbauteil verhältnismäßig groß oder voluminös ist, zum Beispiel lang, kann es beispielsweise in der Staustellung recht weit vom Grundträger oder Lastenaufsatz abstehen.

Bei einem Lastenträger, der in der Art einer Schublade beispielsweise in einen Aufnahmeraum am Heck des Fahrzeugs einführbar ist, kann zudem das Problem auftreten, dass beispielsweise ein großes Erweiterungsbauteil nicht am Heck, zum Beispiel dem Stoßfänger, des Fahrzeugs vorbei in die Staustellung bewegt werden kann, ohne daran anzustoßen.

Es ist daher die Aufgabe der vorliegenden Erfindung, einen Lastenträger mit einem verbesserten Lagerkonzept für eines oder mehrere Erweiterungsbauteile bereitzustellen.

Zur Lösung der Aufgabe ist ein Lastenträger gemäß der technischen Lehre des Anspruchs 1 vorgesehen.

Ein Grundgedanke der Erfindung ist es, dass durch eine Schwenklagerung mit einem zur Drehbarkeit zusätzlichen Bewegungsfreiheitsgrad, wofür z.B. eines oder mehrere zusätzliche Drehlager, eines oder mehrere Schiebelager oder auch eine Kombination davon vorgesehen ist oder sind, eine verbesserte Beweglichkeit des Erweiterungsbauteils bezüglich des Grundträgers oder des Lastenaufsatzes gegeben ist. Das mindestens eine Zusatzlager kann also ein Schiebelager, ein Schwenklager oder beides umfassen.

Es versteht sich, dass beispielsweise eine oder mehrere der Drehachsen, die die Lageranordnung aufweist, nicht raumfeste Drehachsen sein können. Beispielsweise schwenkt die 2. Drehachse um die Grund-Drehachse, so dass sie nicht ortsfest ist.

Bei den Drehachsen ist es vorteilhaft, wenn sie beispielsweise ausschließlich vertikal verlaufen. Eine andere Variante der Erfindung kann vorsehen, dass eine, mehrere oder alle Drehachsen der Lageranordnung nicht horizontal verlaufen, d.h. einen Winkel zur Horizontalen aufweisen. Beispielsweise können die Drehachsen vertikal sein, aber auch um einen Winkel von beispielsweise mindestens 5°, vorzugsweise mindestens 10°, weiter bevorzugt 15-20°, oder auch 10-30° oder 15 bis 45°, zur Horizontalen aufweisen.

Es ist auch möglich, dass die Bewegung mit der Lageranordnung geführt ist, beispielsweise durch eine zusätzlich zur Lageranordnung vorgesehene Kulissenführung und/oder einen oder mehrere Lenkarme, die einerseits am Grundträger oder Lastenaufsatz gelagert sind, andererseits am Erweiterungsbauteil gelagert sind.

Ein weiterer, an sich eigenständig erfindungsgemäßer Gedanke bei einem Lastenträger der eingangs genannten Art ist es, anstelle oder in Ergänzung einer Schwenklagerung, die allgemein bekannt ist, eine Schiebelagerung für ein Erweiterungsbauteil bereitzustellen. Die Schiebelagerung ermöglicht ein kompaktes, Platz sparendes Verstellen des Erweiterungsbauteils relativ zum Grundträger oder Lastenaufsatz. Bevorzugt ist dabei sogar ein teleskopartiges Verstellen. Das Schiebelager kann selbstverständlich auch beispielsweise eine Langlochführung umfassen.

Es ist also möglich, dass die Lageranordnung ausschließlich ein Schiebelager und kein Schwenklager umfasst.

Das erfindungsgemäße Konzept kann zweckmäßigerweise bei Erweiterungsbauteilen Anwendung finden, die manuell, insbesondere ausschließlich manuell, verstellbar sind. Im Prinzip spricht jedoch nichts dagegen, das jeweilige Erweiterungsbauteil auch motorisch zu vorstellen, zum Beispiel mittels eines Seilzuges, eines Zahngetriebes, durch einen Druckluftantrieb, Elektroantrieb einschließlich eines Elektromotors oder -magneten oder dergleichen. Ein manueller oder motorischer Antrieb zu einer Verstellung eines Erweiterungsbauteils gemäß Oberbegriff des Anspruchs 1 stellt einen an sich eigenständigen Gedanken dar.

Es ist im Rahmen der Erfindung möglich, dass für die Verstellung des Erweiterungsbauteils entlang nur eines einzigen Bewegungsfreiheitgrads ein Antrieb vorgesehen ist, die Verstellung bezüglich mindestens eines zweiten Bewegungsfreiheitgrads jedoch manuell erfolgt. Ferner können mehrere Bewegungsfreiheitgrade mittels eines oder mehrerer manueller oder motorischer Antriebe verstellbar sein, während die Verstellung des Erweiterungsbauteils entlang eines weiteren Bewegungsfreiheitgrades manuell erfolgt.

Es ist auch möglich, dass für mehrere Bewegungsfreiheitsgrade jeweils ein separater Antrieb vorhanden ist. Weiterhin kann ein Antrieb auch die Verstellung bezüglich mehrerer Bewegungsfreiheitgrade ermöglichen, beispielsweise direkt oder aber auch über ein Übertragungsgetriebe. Beispielsweise kann ein Seilzugmechanismus, ein Zahnradgetriebe oder dergleichen vorgesehen sein.

Der Grundträger und der Lastenaufsatz sind beispielsweise in der Art von Gestellen, zum Beispiel Tragegestellen oder Stützgestellen, ausgestaltet. Der Lastenaufsatz ist beispielsweise bezüglich des Grundträgers beweglich gelagert, zum Beispiel schwenkbar und oder verschieblich, so dass er beispielsweise zum Öffnen einer Heckklappe des Fahrzeugs vom Heck des Fahrzeugs weg verstellt werden kann und dann eine Ladestellung einnimmt. In einer Gebrauchsstellung oder Fahrstellung hingegen ist der Lastenaufsatz zum Grundträger hin verstellt und wird von diesem an vorteilhaft mehreren Stellen gestützt. Als ein Erweiterungsbauteil im Sinne der Erfindung wird also nicht der bezüglich des Grundträgers optional bewegliche Lastenaufsatz verstanden.

Es versteht sich, dass der Lastenaufsatz eine Option darstellt, das heißt nicht vorhanden sein muss, und dass auch ein Grundträger unmittelbar zum Tragen der Last ausgestaltet und eines oder mehrere erfindungsgemäß gelagerte Erweiterungsbauteile aufweisen kann.

Das mindestens eine Zusatzlager umfasst zweckmäßigerweise ein Drehlager. Das Drehlager hat eine im Verhältnis zur Grund-Drehachse als zweite Drehachse zu bezeichnende Drehachse.

Die Grund-Drehachse und die zweite Drehachse sind zweckmäßigerweise zueinander parallel oder in einem Winkel von null bis beispielsweise 30°, vorzugsweise von 0-15°, oder auch flacher geneigt, z.B. 2-7 Grad. Selbstverständlich ist es auch denkbar, dass eine oder mehrere Drehachsen einen größeren Winkel zueinander haben, zum Beispiel 45°, 50° oder dergleichen.

Die Lageranordnung weist zweckmäßigerweise ein Lagerteil mit einer Aufnahme für einen Abschnitt des mindestens einen Erweiterungsbauteils auf, der vor die Grund-Drehachse vorsteht. Mithin kann also der Abschnitt des Erweiterungsbauteils, den man auch als einen Lagerabschnitt bezeichnen könnte, in die Aufnahme des Lagerteil des Zusatzlagers eingeschwenkt werden. Es versteht sich, dass auch das (Grund-) Drehlager eine solche Aufnahme aufweisen kann.

Die Aufnahme kann selbstverständlich auch bei einem Schiebelager vorgesehen sein, beispielsweise in der Art einer Teleskop-Aufnahme ausgestaltet sein.

Das Lagerteil weist beispielsweise sich neben der Aufnahme erstreckende Haltearme auf, an deren freien Endbereichen das mindestens eine Erweiterungsbauteil drehbar oder auch verschieblich gelagert ist.

Das mindestens eine Erweiterungsbauteil umfasst in einer bevorzugten Ausführungsform eine Leuchte. Es ist aber auch möglich, dass das Erweiterungsbauteil ein Tragbauteil ist, zum Beispiel eine Rinne, auf der ein Fahrrad oder eine sonstige Last abgestellt werden kann.

Das mindestens eine Erweiterungsbauteil ist zweckmäßigerweise an einem vom Heck des Fahrzeugs am weitesten entfernten Endbereich mittels der erfindungsgemäßen Lageranordnung gelagert.

Das mindestens eine Erweiterungsbauteil ist bevorzugt an einem Querträger, insbesondere einem Kennzeichenträger, mittels der Lageranordnung beweglich gelagert. Sofern ein Querträger zur Lagerung des Erweiterungsbauteils dient, ist dieser insbesondere ein hinterer, vom Heck des Fahrzeugs am weitesten entfernter Querträger.

Das mindestens eine Erweiterungsbauteil liegt bevorzugt an einer beim Gebrauch des Lastenträgers in Längsrichtung des Fahrzeugs verlaufenden Längskontur an, wenn es in der Staustellung ist. Es ist auch möglich, dass das Erweiterungsbauteil in der Staustellung zumindest im wesentlichen parallel zu dieser Längskontur verläuft. Weiterhin ist es möglich, dass das Erweiterungsbauteil in der Staustellung im Wesentlichen zwischen Längskonturen, zum Beispiel Längsträgern, des Lastenträgers angeordnet ist, wobei die Längskonturen bzw. Längsträger bei Gebrauch des Lastenträgers in Längsrichtung des Fahrzeugs verlaufen.

Selbstverständlich ist es auch möglich, dass das mindestens eine Erweiterungsbauteil in der Staustellung zwischen anderen Tragkomponenten des Grundträgers oder des Lastenaufsatzes positioniert ist, während das jeweilige Erweiterungsbauteil in der Gebrauchsstellung aus dem jeweiligen Zwischenraum oder Innenraum herausgeschwenkt und/oder heraus verschoben ist.

Es versteht sich, dass das mindestens eine Erweiterungsbauteil in der Staustellung ganz oder zumindest teilweise auch innerhalb eines von einer Außenkontur des Grundträgers und/oder des Lastenaufsatzes umgebenen Bereichs sein kann. Beispielsweise kann sich das Erweiterungsbauteil in der Staustellung in einem Zwischenraum zwischen Längsträgern des Lastenträgers befinden, während es in der Gebrauchsstellung vor diese Außenkontur ganz oder zumindest im Wesentlichen vorsteht.

Eine andere Variante der Erfindung kann jedoch auch vorsehen, dass das mindestens eine Erweiterungsbauteil in der Staustellung stets ganz oder zumindest im Wesentlichen außerhalb einer Außenkontur des Grundträgers und/oder des Lastenaufsatzes ist.

Die Grund-Drehachse verläuft zweckmäßigerweise etwa vertikal, wenn der Lastenträger an dem Fahrzeug angeordnet ist. Selbst verständlich ist es vorteilhaft, wenn auch die zweite oder jede weitere Drehachse einen etwa vertikalen Verlauf hat, wobei selbstverständlich auch geringe Schrägneigungen bei dieser Formulierung umfasst sind, zum Beispiel Schrägneigungen von 0-15°, vorzugsweise 0-7°, der jeweiligen Drehachse in Bezug auf die Vertikale.

Wenn die erfindungsgemäße Lageranordnung ein Schiebelager umfasst, ist es vorteilhaft, wenn die Schiebeachse des Schiebelagers einen etwa horizontalen Verlauf hat, wobei selbstverständlich auch geringe Schrägneigungen bei dieser Formulierung umfasst sind, zum Beispiel Schrägneigungen von 0-15°, vorzugsweise 0-7°, der Schiebeachse in Bezug auf die Horizontale.

Es sind Haltemittel vorgesehen, die das mindestens eine Erweiterungsbauteil in der Gebrauchsstellung, der Staustellung oder beiden Stellungen jeweils halten. Die Haltemittel umfassen zweckmäßigerweise Rastmittel, zum Beispiel Rastvorsprünge und Rastaufnahmen, Federrasten und dergleichen, um das Erweiterungsbauteil relativ zu einer bezüglich des Grundträgers oder Lastenaufsatzes ortsfesten Komponente zu Verrasten. Die ortsfeste Komponente, an der die Haltemittel das mindestens eine Erweiterungsbauteil festlegen, bildet zweckmäßigerweise einen Bestandteil der Lageranordnung, kann aber auch eine sonstige Komponente beispielsweise des Grundträgers oder des Lastenaufsatzes sein.

Bevorzugt findet das erfindungsgemäße Konzept bei Lastenträgern Anwendung, die in der Art einer Schublade oder eines Schlittens in einen Aufnahmeraum am Heck des Fahrzeugs einführbar sind bzw. aus diesem wieder herausziehbar. Dabei ist eine lineare Lagerung und/oder Drehlagerung des Lastenträgers relativ zum Fahrzeug möglich. Eine Fahrzeug-Lageranordnung, die diese Kinematik ermöglicht, umfasst also beispielsweise ein Drehlager und/oder ein lineares Lager.

Das mindestens eine Erweiterungsbauteil kann mittels eines manuellen und/oder motorischen Antriebes antreibbar sein, beispielsweise zum Verstellen in die Staustellung und/oder die Gebrauchsstellung. Der manuelle Antrieb umfasst beispielsweise eine Kurbel, einen Seilzug oder dergleichen. Der motorische, z.B. elektrische und/oder fluidische, Antrieb umfasst beispielsweise einen Elektromotor. Der Motor kann ein Direktantrieb sein oder auch über ein Getriebe auf das Erweiterungsbauteil wirken.

Aber auch bei Lastenträgern, die beispielsweise an einer Anhängekupplung oder einer separaten, speziell für den Lastenträger vorgesehenen Halterung des Fahrzeugs dauerhaft befestigt oder lösbar befestigbar sind, ist es vorteilhaft, wenn sie bei Nichtgebrauch eine kompakte Bauform haben, also wenig Platz benötigen. Auch in diesem Zusammenhang sind eine oder mehrere erfindungsgemäße Lageranordnungen für eines oder mehrere Erweiterungsbauteile vorteilhaft.
- Figur 1: einen erfindungsgemäßen Lastenträger in Gebrauchsstellung, wobei an dem Lastenträger ein Erweiterungsbauteil mit einer konventionellen und ein anderes Erweiterungsbauteil mit einer erfindungsgemäßen Lageranordnung beweglich gelagert sind,
- Figur 2: den Lastenträger gemäß Figur 1, wobei die Erweiterungsbauteile eine Zwischenstellung zwischen der Gebrauchsstellung und einer Staustellung einnehmen,
- Figur 3: eine Variante des Lastenträgers gemäß Figuren 1 und 2, wobei anstelle der konventionellen Lageranordnung eine weitere erfindungsgemäße Lageranordnung mit einem Schiebelager dargestellt ist, und
- Figur 4: den Lastenträger gemäß Figuren 1 und 2, wobei zwei gleichartige, erfindungsgemäße Lageranordnungen vorgesehen sind und die Erweiterungsbauteile die Staustellung einnehmen.

Ein Lastenträger 10 umfasst einen Grundträger 11 sowie einen an dem Grundträger 11 angeordneten Lastenaufsatz 12. Der Lastenaufsatz 12 kann beispielsweise bezüglich des Grundträgers 11 verschwenkt werden.

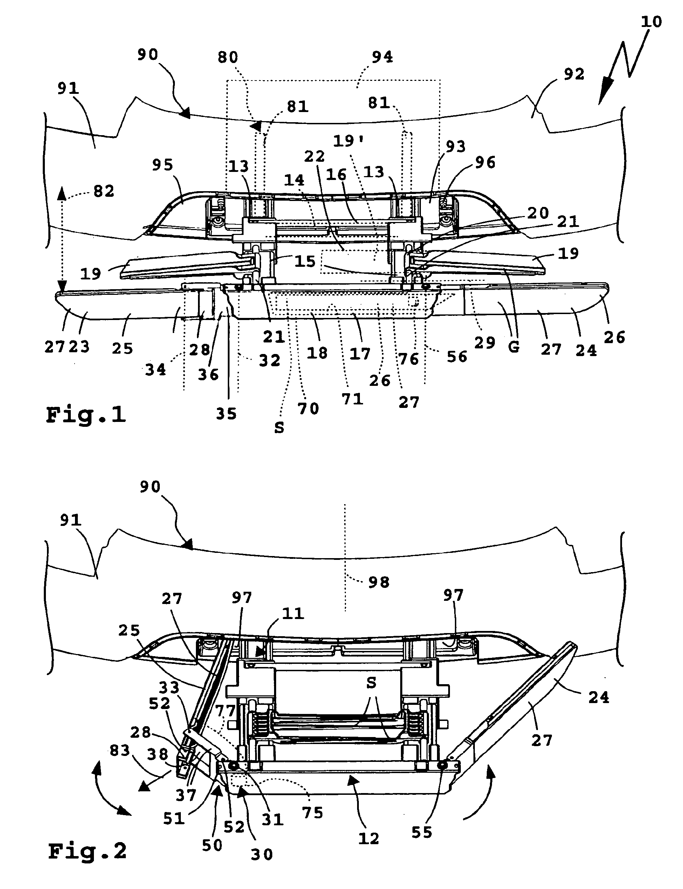

Der Lastenträger 10 ist an einem Fahrzeug 90 angeordnet. In einer in Figur 1 dargestellten Fahrstellung steht der Lastenträger vor ein Heck 91 des Fahrzeugs 90 vor. Der Lastenträger 10 kann bei Nichtgebrauch eine Staustellung oder Nichtgebrauchsstellung einnehmen. Das Fahrzeug 90 weist dazu einen Aufnahmeraum 94, den man auch als eine Schubladenaufnahme oder Schlittenaufnahme bezeichnen könnte, auf. An einem Stoßfänger 92 des Fahrzeugs 90 ist eine Öffnung 93 vorhanden, durch die der Lastenträger 10 hindurch bewegt werden kann, um ihn aus dem Aufnahmeraum 94 heraus zu bewegen oder in den Aufnahmeraum 94 hinein.

Der Lastenträger 10 ist mittels einer Fahrzeug-Lageranordnung 80 relativ zum Fahrzeug 90 und an dem Fahrzeug 90 gelagert. Die Fahrzeug-Lageranordnung weist beispielsweise sich in den Aufnahmeraum 94 hinein erstreckende Führungen 81, zum Beispiel Führungsschienen oder sonstige Führungsprofile, auf, an denen der Grundträger 11 geführt ist. Die Fahrzeug-Lageranordnung 80 ist vorliegend eine Lageranordnung zum linearen Führen des Lastenträgers, wobei selbstverständlich auch ein Herausschwenken aus dem Aufnahmeraum 94 oder eine kombinierte Schwenk-/Schiebebewegung mit einer entsprechend modifizierten Fahrzeug-Lageranordnung möglich ist.

Der Grundträger 11 weist 2 Längsträger 13 auf. Die Längsträger 13 können zweckmäßigerweise durch einen oder mehrere Querträger miteinander verbunden sein, beispielsweise einen schematisch dargestellten Querträger 14. Eine solche Querverbindung ist jedoch nicht unbedingt notwendig. Der Grundträger 11 ist als eine Art Gestell ausgestaltet.

Die Längsträger 13 sind an den Führungen 81 verschieblich geführt. Die Längsträger 13 bilden Bestandteile oder umfassen Bestandteile der Fahrzeug-Lageranordnung 80. Beispielsweise sind die beiden Längsträger 13 als Profile oder Gegenkonturen ausgestaltet oder weisen Gegenkonturen auf, die mit den Führungen 81 zusammen wirken.

Der Lastenaufsatz 12 weist Längsträger 15 auf, die durch einen oder mehrere Querträger miteinander verbunden sind, beispielsweise einen näher beim Heck 91 befindlichen, vorderen Querträger 16 und/oder einem hinteren Querträger 17, der weiter vom Heck 91 beabstandet ist.

Die Längsträger 13,15 verlaufen in einer Längsrichtung 98, die auch die Längsrichtung des Fahrzeugs 90 darstellt.

Vorzugsweise ist der Lastenaufsatz 12 relativ zum Grundträger 11 beweglich gelagert, beispielsweise schwenkbar. Ein in der Zeichnung nicht sichtbares Schwenklager lagert den Lastenaufsatz 12 um eine Schwenkachse 29 relativ zum Grundträger 11. Der Lastenaufsatz 12 kann also vom Grundträger 11 nach hinten vom Heck 91 des Fahrzeugs 90 weggeschwenkt werden, beispielsweise zum Beladen eines nicht dargestellten Gepäckabteils des Fahrzeugs 90. In der zum Grundträger 11 hin geschwenkten Fahrstellung (Figur 1) liegen die Längsträger 15 auf den Längsträgern 13 auf. Ferner liegt der Querträger 16 zweckmäßigerweise auf dem optionalen Querträger 14 auf, falls ein Querträger 14 vorgesehen ist.

Der hintere Querträger 17 wird zweckmäßigerweise von einem Kennzeichenträger 18 gebildet oder weist einen Kennzeichenträger auf.

An dem Grundträger 11 oder dem Lastenaufsatz 12 können Tragbauteile beweglich gelagert sein, die zum Abstützen einer Last dienen. Beispielsweise ist es möglich, bei einem erfindungsgemäßen Lastenträger eine Ladewanne, eine Ladeplattform oder dergleichen vorzusehen. Beim Ausführungsbeispiel sind beispielsweise Rinnen zum Abstellen von Fahrrädern vorgesehen, die Tragbauteile 19 bilden.

Die Tragbauteile 19 sind am Lastenaufsatz 12 anhand von Lagern 20 beweglich gelagert. Die Lager 20 umfassen beispielsweise die Tragbauteile 19 durchsetzende Lageraufnahmen, durch die Lagervorsprünge, beispielsweise Stangen 21, durchgesteckt sind. Die Lager 20 und die Stangen 21 befinden sich an den Längsträgern 15, beispielsweise der Oberseite der Längsträger 15. Somit können die Tragbauteile 19 zwischen einer Gebrauchsstellung G, bei der sie seitlich vor den Lastenaufsatz 12 vorstehen und zum Tragen einer Last bereit sind, und einer Staustellung S verstellt werden, in der sie sich in einem Zwischenraum 22 zwischen den Längsträgern 15 befinden. Vorzugsweise liegen die Tragbauteile 19 in der Staustellung S aufeinander, was besonders Platz sparend ist.

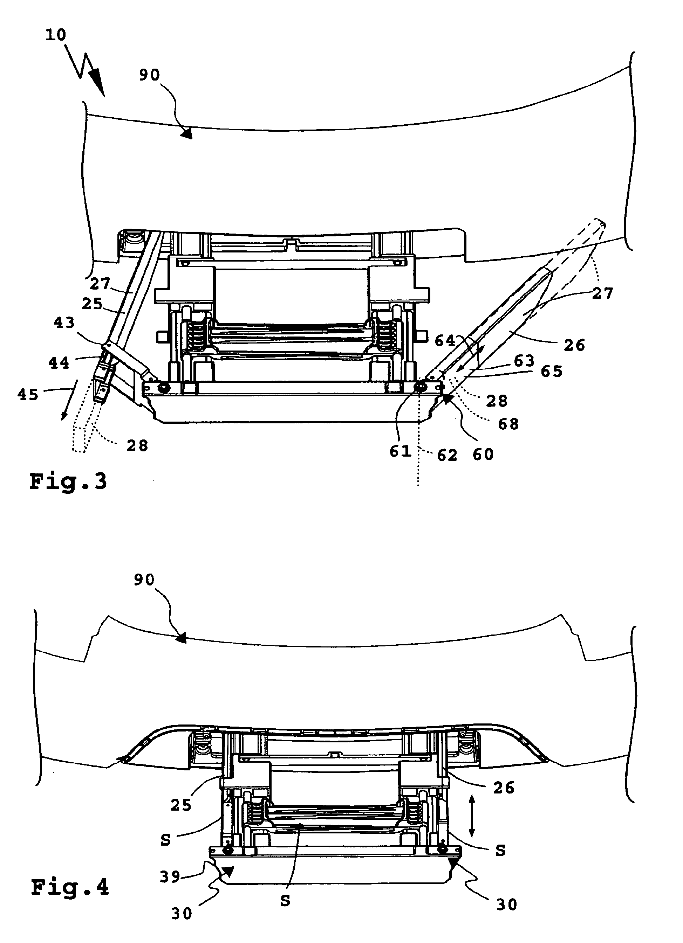

Auch weitere Komponenten des Lastenträgers 10 sind bezüglich des Grundträgers 11 und/oder des Lastenaufsatzes 12 optimal gelagert, so dass sie beim Verstellen zwischen der Gebrauchsstellung G und der Staustellung S, zweckmäßigerweise auch in der Staustellung S, wenig Platz benötigen, nämlich z.B. Leuchten 23, 24. Die Leuchten 23, 24 bilden Erweiterungsbauteile 25, 26, die am Lastenträger, beispielsweise am Lastenaufsatz 12, anhand von Lageranordnungen 30, oder bei dem Ausführungsbeispiel gemäß Figur 3, anhand einer Lageranordnung 60 beweglich gelagert sind.

Zur Verdeutlichung von Unterschieden zwischen den Lageranordnungen 30, 60 und einer konventionellen Lageranordnung ist die Leuchte 24 in der Darstellung gemäß Figur 1 oder Figur 2 mit einem konventionellen Schwenklager 55 am Lastenträger 10, insbesondere dem Lastenaufsatz 12, schwenkbar gelagert. Hier handelt es sich allerdings um eine zeichnerische Darstellung zur Veranschaulichung des Unterschieds zwischen der Erfindung und der bekannten Technik.

Wenn die Erweiterungsbauteile 25, 26 ihre Staustellung S einnehmen (Figur 4) , kann der Lastenträger 10 in den Aufnahmeraum 94 am Fahrzeug 90 eingeschoben werden. Dann liegen die Leuchten 23, 24 seitlich an den Längsträgern 15 an oder verlaufen jedenfalls in der Längsrichtung 98, so dass sie durch die Öffnung 93 hindurch passen. Die freien Enden von insbesondere plattenartigen Leuchtenabschnitten 27, an denen beispielsweise Leuchtmittel, insbesondere Reflektoren, LEDs oder dergleichen, angeordnet sind, können dann in Öffnungen 97 oder Öffnungsbereiche der Öffnung 93 hinein gelangen, die neben den Führungen 81 angeordnet sind. Die Öffnungen 97 sind verhältnismäßig schmal.

Der Lastenträger 10 kann ganz in den Aufnahmeraum 94 eingeschoben werden, so dass der Kennzeichenträger 18 und ein gegebenenfalls an diesem angeordnetes Kennzeichen in einer Aufnahme 95 des Stoßfängers 92 aufgenommen sind. Im Bereich der Aufnahme 95 sind zweckmäßigerweise Anschlag- und Haltemittel 96 vorgesehen, die mit dem Lastenträger 10, beispielsweise dem Kennzeichenträger 18, zusammen wirken. Beispielsweise schlägt der Kennzeichenträger 18 an den Anschlagmitteln 96 an.

Die Leuchten 23, 24, also die Erweiterungsbauteile 25, 26, haben eine verhältnismäßig große Länge, so dass sie in der Gebrauchsstellung G weit vom hinteren Querträgers 17 bzw. Kennzeichenträger 18 abstehen und die an ihnen angeordneten Leuchtmittel einen großen Querabstand aufweisen. Ein Längsabstand 82 des die Erweiterungsbauteile 25, 26 tragenden Bauteils des Lastenträgers 10 zum Heck 91, beispielsweise zum Stoßfänger 92, ist jedoch in der ausgefahrenen Position (Figur 1) des Lastenträgers 10 verhältnismäßig kurz. Für die freien Enden der Leuchten 23, 24 steht daher wenig Schwenkraum zum Schwenken von der Gebrauchsstellung G in die Staustellung S zur Verfügung.

An dem exemplarisch in den Figuren 1 und 2 eingezeichneten Schwenklager 55 für die Leuchte 24 wird deutlich, dass das freie Ende der Leuchte 24 bei einer Drehung um eine Drehachse 56 des Schwenklagers 55 nicht am Stoßfänger 92 vorbei schwenken kann, um von der Gebrauchsstellung G in die Staustellung S oder umgekehrt zu gelangen. Dazu ist der Längsabstand 82 zwischen dem Schwenklager 55 bzw. der Drehachse 56 und dem Heck 91 des Fahrzeugs 90 zu kurz.

Bei der Anlenkung der Leuchten 23 oder 24 mittels der Lageranordnungen 30 oder 60 hingegen ist der Bewegungsraum für die jeweilige Leuchte ausreichend. An dieser Stelle sei bemerkt, dass selbstverständlich auch die Leuchte 24 mittels einer Lageranordnung 30 am Lastenträger 10, beispielsweise dem Lastenaufsatz 12 angelenkt sein kann, was in der Darstellung gemäß Figur 4 deutlich wird.

Die Lageranordnung 30 umfasst ein Drehlager 31 zum Drehen des Erweiterungsbauteils 25, 26 um eine Grund-Drehachse 32, so dass das Erweiterungsbauteil 25 oder 26 um einen 1. Bewegungsfreiheitgrad relativ zum Grundträger 11 oder Lastenaufsatz 12 beweglich ist. Das Drehlager 31 und das Schwenklager 55 sind an denen jeweiligen Längsenden des hinteren Querträgers 17 oder des Kennzeichenträgers 18 angeordnet. Die Grund-Drehachse 32 verläuft in einer zu den Längsträgern 15 orthogonalen Ebene, also etwa vertikal (wenn das Fahrzeug 90 auf einem horizontalen, ebenen Untergrund steht).

Das Drehlager 31 lagert ein Zusatzlager 33, an dem wiederum die Leuchte 23, 24 gelagert ist. Das Zusatzlager 33 ist bei der Lageranordnung 30 auch ein Drehlager, so dass die Leuchte 23, 24 um eine weitere, zweite Drehachse 34 drehen oder schwenken kann und somit einen weiteren Bewegungsfreiheitgrad hat. Die Drehachsen 32, 34 verlaufen parallel, jedoch wie in einem Abstand zueinander.

Das Zusatzlager 33 umfasst ein Lagerteil 35, das um die Grund-Drehachse 32 schwenkbar gelagert ist. Beispielsweise ist das Lagerteil 35, insbesondere ein Grundkörper 36 desselben, von einem Lagerbolzen durchsetzt, der in Lageraufnahmen am Kennzeichenträger 18 aufgenommen ist, insbesondere darin drehen kann. Selbstverständlich könnte auch das Lagerteil 35 um den Lagerbolzen schwenken. Von dem Lagerteil 35, insbesondere dem Grundkörper 36, können auch Lagerbolzen abstehen oder das Lagerteil 35, insbesondere der Grundkörper 36, könnte Lageraufnahmen aufweisen, in die Lagervorsprünge eingreifen.

Von dem- Grundkörper 36 des Lagerteils 35 stehen Haltearme 37 ab, an deren freien Enden die Leuchte 23 oder 24 schwenkbar gelagert ist. Beispielsweise stehen an der jeweiligen Lagerstelle der Leuchte 23 oder 24 von deren Grundkörper oder Gehäuse Lagervorsprünge ab, die in Lageraufnahmen an den Haltearmen 37 eingreifen.

Der Leuchtenabschnitt 27 und ein weiterer Abschnitt 28 der jeweiligen Leuchte 23 oder 24 stehen radial an einander entgegengesetzten Seiten von der Drehachse 34 ab. Den Abschnitt 28 könnte man auch als einen Lagerabschnitt bezeichnen. Der Abschnitt 28 kann nämlich in eine zwischen den Haltearmen 37 vorgesehene Aufnahme 38 einschwenken (Figur 1).

Eine erfindungsgemäße Lageranordnung weist zweckmäßigerweise einen oder mehrere Anschläge zum Begrenzen der Drehbewegung, Schwenkbewegung oder Schiebebewegung des Erweiterungsbauteils auf. So kann zum Beispiel an der Aufnahme 38 ein Schwenkanschlag vorgesehen sein, der die Schwenkbewegung der Leuchte 23, 24 begrenzt, d.h. dass die Leuchte 23, 24 an dem Schwenkanschlag in der Gebrauchsstellung G anschlägt.

Auch Lagerteile erfindungsgemäßer Lageranordnungen sind zweckmäßigerweise mit einem oder mehreren Anschlägen versehen. Beispielsweise schlägt das Lagerteil 35 an einem Anschlag 39 in der Gebrauchsstellung G an. Der Anschlag 39 ist beispielsweise durch einen Abschnitt des Kennzeichenträgers 18 gebildet.

Weiterhin ist es vorteilhaft, wenn das jeweilige Erweiterungsbauteil in einer der Stellungen, beispielsweise der Gebrauchsstellung G oder der Staustellung S, durch Haltemittel gehalten wird. Beispielsweise sind die Leuchten 23, 24 in der Gebrauchsstellung G anhand von Rastmitteln 50 verrastbar. Die Rastmittel 50 umfassen beispielsweise Rastvorsprünge 51, die zum Verrasten mit Rastaufnahmen 52 vorgesehen sind. Beispielsweise sind an dem Abschnitt 28 jeweils Rastaufnahmen 52 vorgesehen, in die nicht sichtbaren Rastvorsprünge 51 an den Haltearmen 37 eingreifen. Auch beim Kennzeichenträger 18 bzw. Querträger 17, jedenfalls im Bereich des Drehlagers 31, sind Rastmittel zweckmäßig. So können dort beispielsweise zum Lagerteil 35 vorstehende Rastvorsprünge 51 vorgesehen sein, die in Rastaufnahmen 52 am Lagerteil 35 eingreifen können.

Eine erfindungsgemäße Lageranordnung ist zweckmäßigerweise als eine Mehrgelenkanordnung ausgestaltet. Das wird auch beim Ausführungsbeispiel mit der Lageranordnung 30 deutlich: der der Lageranordnung 30 zugewandte Abschnitt des Erweiterungsbauteils 25, 26, d.h. der Abschnitt 28, kann nach außen von einer oder beiden Drehachsen 32, 34 weg schwenken, was mit einem Pfeil 83 angedeutet ist. Dadurch kann das freie Ende des Erweiterungsbauteils 25,26, d.h. das freie Ende des Leuchtenabschnitt 27, sozusagen in die relativ schmalen Öffnungen 97 einfädeln oder einführen, obwohl nur ein kurzer Längsabstand 82 eines ortsfesten Bestandteils der Lageranordnung 30 zum Fahrzeug-Heck 91 vorhanden ist.

Es ist zudem vorteilhaft, wenn eine erfindungsgemäße Lageranordnung eines oder mehrere Schiebelager aufweist. So könnte beispielsweise anstelle des nur als Drehlager ausgestalteten Zusatzlagers 33 ein als Schwenk-Schiebelager ausgestaltetes Zusatzlager 43 vorgesehen sein, so dass das Erweiterungsbauteil 25 nicht nur um die zweite Drehachse 34 schwenken oder drehen kann, sondern auch noch linear verstellbar ist. Beispielsweise greifen Lagervorsprünge an den Haltearmen 37 in Langlöcher 44 oder sonstige Linearführungen am Erweiterungsbauteil 25 ein, so dass dieses nicht nur um die Drehachse 34 schwenken, sondern auch quer zur Drehachse 34 linear verstellbar ist, was durch einen Pfeil 45 angedeutet ist. Der Pfeil 45 repräsentiert eine Schiebeachse des Zusatzlagers 43.

Bei der in Figur 3 dargestellten weiteren Variante einer erfindungsgemäßen Lageranordnung, nämlich der Lageranordnung 60, ist auch ein Schiebelager vorhanden, nämlich ein Zusatzlager 63. Ein Lagerteil 65 des Zusatzlagers 63 ist an einem Drehlager 61, das anstelle des Schwenklagers 55 oder des Drehlagers 31 vorgesehen sein kann, weist eine Aufnahme 68 auf, in die der hintere Abschnitt 28 des Erweiterungsbauteils 26 bzw. der rechten Leuchte 24 in der Art eines Teleskops einschiebbar ist.

Das Lagerteil 65 schwenkt um eine Grund-Drehachse 62 des Drehlagers 61. In gestrichelten Linien ist eine aus dem Schiebe-Zusatzlager 63 ausgezogene Position des Leuchtenabschnitts 27 dargestellt, in der dieser mit dem Fahrzeug-Heck 91 kollidieren würde. Durch die teleskopartige Verstellung des Leuchtenabschnitt 27 in die Aufnahme 68 hinein steht dieser Leuchtenabschnitts 27 weniger weit von der Grund-Drehachse 62 ab, so dass das Erweiterungsbauteils 26 am Heck 91 vorbei schwenken kann, beispielsweise um die zur Längskontur des Lastenaufsatzes 12 parallele oder an dieser anliegende Staustellung S einzunehmen.

weiterhin können bei einem erfindungsgemäßen Lastenträger auch entlang einer oder mehrerer Schiebeachsen oder Schiebelinien verschiebbare, jedoch drehfeste oder nicht schwenkbare Erweiterungsbauteile, zum Beispiel Leuchten, Rinnen zum Tragen von Fahrrädern oder dergleichen, vorgesehen sein. In Figur 1 ist exemplarisch eingezeichnet, dass beispielsweise eines oder beide Erweiterungsbauteile 25, 26 bezüglich des Grundträgers 11 bzw. des Lastenaufsatzes 12 verschieblich gelagert sein können. Beispielsweise ist der Leuchtenabschnitt 27 der rechten Leuchte 24 mithilfe eines Schiebelagers 70 verschieblich bezüglich des Grundträgers 11 bzw. des Lastenaufsatzes 12 gelagert. Das Schiebelager 70 umfasst beispielsweise eine Aufnahme 71 am hinteren Querträger 17 oder Kennzeichenträger 18, in die der Leuchtenabschnitt 27 teleskopartig eingeschoben werden kann.

Es versteht sich, dass das Schiebelager 70 beispielsweise auch Langlöcher, in die Bolzen am jeweils anderen Bauteil eingreifen, umfassen kann. Die Aufnahme 71 ist also nicht unbedingt nötig.

Natürlich könnten auch für beispielsweise die Tragbauteile 19 oder das linke Erweiterungsbauteil 25 (die linke Leuchte 23) Schiebelager in der Art des Schiebelagers 70 vorhanden sein. Beispielhaft ist ein in Richtung der Staustellung S verstelltes Tragbauteil 19' in Figur 1 eingezeichnet.

Weiterhin ist es auch vorteilhaft, wenn beispielsweise ein Erweiterungsbauteil teleskopierbar ist. Beispielsweise könnte ein Leuchtenabschnitt einer Leuchte aus mehreren Teleskopsegmenten bestehen, die ineinander einschiebbar bzw. auseinander ausziehbar sind. Das Erweiterungsbauteil selbst kann also einen Bestandteil der Lageranordnung, das heißt es Schiebelager, bilden.

Zwar sieht eine typische Variante der Erfindung vor, dass das Erweiterungsbauteil manuell betätigt wird, um es zwischen der Staustellung und der Gebrauchsstellung zu verstellen. Es versteht sich, dass hierfür auch ein Antrieb vorgesehen sein kann, beispielsweise ein Seilzug, ein Zahngetriebe oder dergleichen, zur manuellen oder motorischen Betätigung des Erweiterungsbauteils.

Beispielhaft ist in Figur 2 ein Antrieb 75, zum Beispiel ein Elektromotor, eingezeichnet, mit dem beispielsweise das Erweiterungsbauteil 25 schwenk-antreibbar ist.

Der Antrieb 75 kann beispielsweise nur eine Dreh-Bewegung um die Grund-Drehachse 32 bewirken. Es ist aber auch möglich, dass er beispielsweise über einen Seilzug, ein Zahnradgetriebe oder dergleichen Übertragungsgetriebe 77, eine Drehbewegung um die zweite Drehachse 34 bewirkt. Selbstverständlich kann für die Bewegung um die 2. Drehachse 34 auch ein weiterer Antrieb, zum Beispiel Elektromotor, vorhanden sein.

Ein Linearantrieb 76, zum Beispiel ein elektrischer Linearantrieb, ein pneumatischer Zylinder oder dergleichen, kann beispielsweise zur linearen Verstellung des Erweiterungsbauteils 26 bezüglich des Schiebelagers 70 dienen.

Die Antriebe 75, 76 können Bestandteile der Lageranordnung in 30 oder des Schiebelagers 70 bilden oder auch davon separate Bauteile sein.

## Patentansprüche

1. Lastenträger für ein Fahrzeug (90), insbesondere für ein Personen-Kraftfahrzeug, mit einem an einem Heck (91) des Fahrzeugs (90) befestigbaren oder anordenbaren Grundträger (11) zum Tragen einer Last, wobei mindestens ein Erweiterungsbauteil (25, 26) an dem Grundträger (11) oder an einem an dem Grundträger (11) angeordneten Lastenaufsatz (12) mittels einer Lageranordnung (30, 60) zwischen einer Gebrauchsstellung (G) und einer Staustellung (S) beweglich gelagert ist, wobei das mindestens eine Erweiterungsbauteil (25, 26) in der Gebrauchsstellung (G) weiter von einer Außenkontur des Grundträgers (11) oder des Lastenaufsatzes (12) absteht als in der Staustellung (S), so dass der Lastenträger (10) insbesondere zum Verstauen in einem Aufnahmeraum (94) des Fahrzeugs (90) ein kleineres Volumen aufweist, wenn das mindestens eine Erweiterungsbauteil (25, 26) in der Staustellung (S) ist, **dadurch gekennzeichnet, dass** die Lageranordnung (30, 60) ein Drehlager (31) zum Drehen des mindestens einen Erweiterungsbauteils (25, 26) um eine einen ersten Bewegungsfreiheitgrad darstellende Grund-Drehachse (32, 62) und mindestens ein Zusatzlager (33, 63) zum Bewegen des mindestens einen Erweiterungsbauteils (25, 26) mit mindestens einem von den ersten Bewegungsfreiheitgrad verschiedenen zweiten Bewegungsfreiheitgrad relativ zu dem Grundträger (11) oder dem Lastenaufsatz (12) umfasst, dass der Lastenträger Haltemittel, insbesondere Rastmittel (50), zum Halten oder Verrasten des mindestens einen Erweiterungsbauteils (25, 26) in der Gebrauchsstellung (G) und/oder der Staustellung (S) aufweist.

2. Lastenträger nach Anspruch 1, **dadurch gekennzeichnet, dass** das mindestens eine Zusatzlager (33, 63) ein Drehlager (31) umfasst, das eine von der Grund-Drehachse (32, 62) verschiedene zweite Drehachse (34) aufweist.

3. Lastenträger nach Anspruch 2, **dadurch gekennzeichnet, dass** die Grund-Drehachse (32, 62) und die zweite Drehachse (34) zueinander parallel oder in einem Winkel zwischen 0 bis etwa 30° zueinander winkelig sind.

4. Lastenträger nach einem der vorhergehenden Ansprüche, **dadurch gekennzeichnet, dass** die Lageranordnung (30, 60), insbesondere das mindestens eine Zusatzlager (33, 63), ein Lagerteil (35; 65) mit einer Aufnahme (38; 68) für einen Abschnitt (28) des mindestens einen Erweiterungsbauteils (25, 26) aufweist, der insbesondere vor die Grund-Drehachse (32, 62) vorsteht.

5. Lastenträger nach Anspruch 4, **dadurch gekennzeichnet, dass** das Lagerteil (35; 65) sich neben der Aufnahme (38; 68) erstreckende Haltearme (37) aufweist, an deren freien Endbereichen das mindestens eine Erweiterungsbauteil (25, 26) drehbar oder verschieblich gelagert ist.

6. Lastenträger nach einem der vorhergehenden Ansprüche, **dadurch gekennzeichnet, dass** das mindestens eine Erweiterungsbauteil (25, 26) eine Leuchte (23) und/oder ein zumAuflegen einer Last vorgesehenes Tragbauteil (19) umfasst.

7. Lastenträger nach einem der vorhergehenden Ansprüche, **dadurch gekennzeichnet, dass** das mindestens eine Erweite-. rungsbauteil (25, 26) an einem Querträger (17) des Lastenträgers (10), insbesondere einem hinteren vom Heck (91) des Fahrzeugs (90) am weitesten entfernten Querträger (17) oder an einem Kennzeichenträger (18), mittels der Lageranordnung (30, 60) beweglich gelagert ist.

8. Lastenträger nach einem der vorhergehenden Ansprüche, **dadurch gekennzeichnet, dass** das mindestens eine Erweiterungsbauteil (25, 26) in der Staustellung (S) an einer beim Gebrauch des Lastenträgers (10) in Längsrichtung (98) des Fahrzeugs (90) verlaufenden Längskontur, insbesondere an einem Längsträger (15), des Lastenträgers (10) anliegt oder parallel zu dieser Längskontur verläuft und/oder dass das mindestens eine Erweiterungsbauteil (25, 26) in der Staustellung (S) im Wesentlichen zwischen bei Gebrauch des Lastenträgers (10) in Längsrichtung (98) des Fahrzeugs (90) verlaufenden Längskonturen, insbesondere an Längsträgern (15), des Lastenträgers (10) angeordnet ist.

9. Lastenträger nach einem der vorhergehenden Ansprüche, **dadurch gekennzeichnet, dass** die Grund-Drehachse (32, 62) etwa vertikal verläuft, wenn der Lastenträger (10) an dem Fahrzeug (90) angeordnet ist.

10. Lastenträger (10) nach einem der vorhergehenden Ansprüche , **dadurch gekennzeichnet, dass** die Lageranordnung (30, 60) mindestens ein Schiebelager (70) umfasst, so dass das mindestens eine Erweiterungsbauteil (25, 26) um eine Schiebeachse (64) des Schiebelagers (70) relativ zu dem Grundträger (11) oder dem Lastenaufsatz (12) verschieblich ist.

11. Lastenträger nach Anspruch 10, **dadurch gekennzeichnet, dass** das mindestens eine Schiebelager eine, insbesondere taschenartige, Teleskop-Aufnahme aufweist, in die ein Abschnitt (28) des mindestens einen Erweiterungsbauteils (25, 26) einschiebbar ist.

12. Lastenträger nach Anspruch 10 oder 11, **dadurch gekennzeichnet, dass** eine Schiebeachse (64) des mindestens einen Schiebelagers (70) der Lageranordnung (30, 60) etwa horizontal verläuft, wenn der Lastenträger (10) an dem Fahrzeug (90) angeordnet ist.

13. Lastenträger nach einem der vorhergehenden Ansprüche, **dadurch gekennzeichnet, dass** er einen manuellen und/oder motorischen, insbesondere elektrischen und/oder fluidischen, Antrieb (90) und/oder ein Übertragungsgetriebe (77) zum Verstellen des mindestens einen Erweiterungsbauteils (25, 26) bezüglich mindestens eines Bewegungsfreiheitsgrades zwischen der Gebrauchsstellung (G) und der Staustellung (S) aufweist.

14. Lastenträger nach einem der vorhergehenden Ansprüche, **dadurch gekennzeichnet, dass** er eine Befestigungseinrichtung zur lösbaren Befestigung des Lastenträgers (10) an dem Fahrzeug (90), insbesondere an einer Anhängekupplung des Fahrzeugs (90), oder eine Fahrzeug-Lageranordnung (80) zum insbesondere in der Art einer Schublade beweglichen Lagern an dem Fahrzeug (90) umfasst.

## Claims

1. Load carrier for a vehicle (90), in particular for a motor car, with a base support (11) for carrying a load and which may be attached or fitted to a rear (91) of the vehicle (90), wherein at least one extension member (25, 26) is mounted on the base support (11) or on a load attachment (12) fitted to the base support (11) by means of a bearing assembly (30, 60) so as to be movable between a position of use (G) and a stored position (S), wherein the extension member or members (25, 26) protrudes or protrude in the position of use (G) further from an external contour of the base support (11) or the load attachment (12) than in the stored position (S), so that the load carrier (10) has a smaller volume, in particular for storing in a storage space (94) of the vehicle (90) when the extension member or members (25, 26) is or are in the stored position (S), **characterised in that** the bearing assembly (30, 60) comprises a rotary bearing (31) for rotating the extension member or members (25, 26) around a base axis of rotation (32, 62) representing a first degree of freedom of movement, and at least one supplementary bearing (33, 63) for moving the extension member or members (25, 26) with at least a second degree of freedom of movement differing from the first degree of freedom of movement relative to the base support (11) or the load attachment (12), that the load carrier has holding means, in particular latching means (50), for holding or engaging the extension member or members (25, 26) in the position of use (G) and/or the stored position (S).

2. Load carrier according to claim 1, **characterised in that** the supplementary bearing or bearings (33, 63) comprises or comprise a rotary bearing (31) which has a second axis of rotation (34) different from the base axis of rotation (32, 62).

3. Load carrier according to claim 2, **characterised in that** the base axis of rotation (32, 62) and the second axis of rotation (34) are parallel to one another or at an angle to one another of between 0 and around 30°.

4. Load carrier according to any of the preceding claims, **characterised in that** the bearing assembly (30, 60), in particular the supplementary bearing or bearings (33, 63), has a bearing member (35; 65) with a seat (38; 68) for a section (28) of the extension member or members (25, 26) which in particular protrudes beyond the base axis of rotation (32, 62).

5. Load carrier according to claim 4, **characterised in that** the bearing member (35; 65) has retaining arms (37) extending next to the seat (38; 68) and on the free end sections of which the extension member or members (25, 26) is or are rotatably or slidably mounted.

6. Load carrier according to any of the preceding claims, **characterised in that** the extension member or members (25, 26) has or have a lamp (23) and/or a carrier part (19) provided for the placing of a load.

7. Load carrier according to any of the preceding claims, **characterised in that** the extension member or members (25, 26) is or are mounted, movable by means of the bearing assembly (30, 60), on a cross-member (17) of the load carrier (10), in particular a rear cross-member (17) furthest away from the rear (91) of the vehicle (90) or on a license plate support (18).

8. Load carrier according to any of the preceding claims **characterised in that**, in the stored position (S), the extension member or members (25, 26) makes or make contact with a longitudinal contour, in particular with a longitudinal member (15), of the load carrier (10) running in the axial direction (98) of the vehicle (90) during use of the load carrier (10), or run parallel to this longitudinal contour, and/or that the extension member or members (25, 26) in the stored position (S) is or are located substantially between longitudinal contours of the load carrier (10) running in the axial direction (98) of the vehicle (90), in particular on longitudinal members (15), during use of the load carrier (10).

9. Load carrier according to any of the preceding claims, **characterised in that** the base axis of rotation (32, 62) runs roughly vertically when the load carrier (10) is fitted to the vehicle (90).

10. Load carrier (10) according to any of the preceding claims, **characterised in that** the bearing assembly (30, 60) includes at least one sliding bearing (70), so that the extension member or members (25, 26) may be moved around a slide axis (64) of the sliding bearing (70) relative to the base support (11) or the load attachment (12).

11. Load carrier according to claim 10, **characterised in that** the sliding bearing or bearings has or have a telescopic holder, in particular pocket-like, into which a section (28) of the extension member or members (25, 26) may be pushed.

12. Load carrier according to claim 10 or 11, **characterised in that** a slide axis (64) of the sliding bearing or bearings (70) of the bearing assembly (30, 60) runs roughly horizontally when the load carrier (10) is fitted to the vehicle (90).

13. Load carrier according to any of the preceding claims, **characterised in that** it has a manual and/or motorised, in particular electrical or fluidic, drive (90) and/or a transmission gear (77) for adjusting the extension member or members (25, 26) with reference to at least one degree of freedom of movement between the position of use (G) and the stored position (S).

14. Load carrier according to any of the preceding claims, **characterised in that** it has a fastening device for releasable fastening of the load carrier (10) to the vehicle (90), in particular to a trailer coupling of the vehicle (90), or includes a vehicle bearing assembly (80) for movable mounting on the vehicle (90), in particular in the manner of a drawer.

## Revendications

1. Support de charges pour un véhicule (90), en particulier pour une voiture automobile particulière, comprenant un support de base (11) pouvant être fixé ou pouvant être disposé au niveau d'une partie arrière (91) du véhicule (90) et servant à supporter une charge, sachant qu'au moins un élément d'extension (25, 26) est logé de manière mobile au niveau du support de charges (11) ou au niveau d'élément rapporté de charge (12) disposé au niveau du support de base (11) au moyen d'un ensemble formant palier (30, 60) entre une position d'utilisation (G) et une position de rangement (S), sachant que l'élément d'extension (25, 26) au moins au nombre de un fait davantage saillie d'un contour extérieur du support de base (11) ou de l'élément rapporté de charge (12) dans la position d'utilisation (G) que dans la position de rangement (S) de sorte que le support de charges (10) destiné en particulier à être rangé dans un espace de logement (94) du véhicule (90) présente un volume plus petit lorsque d'extension (25, 26) au moins au nombre de un se trouve dans la position de rangement (S), **caractérisé en ce que** l'ensemble de paliers (30, 60) comprend un palier rotatif (31) servant à faire tourner l'élément d'extension (25, 26) au moins au nombre de un autour d'un axe de rotation de base (32, 62) représentant un premier degré de liberté de mouvement et au moins un palier supplémentaire (33, 63) servant à déplacer l'élément d'extension (25, 26) au moins au nombre de un avec au moins un deuxième degré de liberté de mouvement différent du premier degré de liberté de mouvement par rapport au support de base (11) ou par rapport à l'élément rapporté de charge (12), **en ce que** le support de charges présente des moyens de maintien, en particulier des moyens d'encliquetage (50), servant à maintenir ou à enclencher l'élément d'extension (25, 26) au moins au nombre de un dans la position d'utilisation (G) et/ou dans la position de rangement (S).

2. Support de charges selon la revendication 1, **caractérisé en ce que** le palier supplémentaire (33, 63) au moins au nombre de un comprend un palier rotatif (31), qui présente un deuxième axe de rotation (34) différent de l'axe de rotation de base (32, 62).

3. Support de charges selon la revendication 2, **caractérisé en ce que** l'axe de rotation de base (32, 62) et le deuxième axe de rotation (34) sont parallèles l'un par rapport à l'autre ou forment l'un par rapport à l'autre un angle compris entre 0 et environ 30°.

4. Support de charges selon l'une quelconque des revendications précédentes, **caractérisé en ce que** l'ensemble de paliers (30, 60) présente en particulier le palier supplémentaire (33, 63) au moins au nombre de un, une partie de palier (35 ; 65) dotée d'un logement (38 ; 68) pour une section (28) de l'élément d'extension (25, 26) au moins au nombre de un, qui fait saillie notamment de l'axe de rotation de base (32, 62).

5. Support de charges selon la revendication 4, **caractérisé en ce que** la partie de palier (35 ; 65) présente des bras de maintien (37) s'étendant à côté du logement (38, 68), au niveau des zones d'extrémité desquels est logé de manière à pouvoir tourner ou de manière à pouvoir être coulissé l'élément d'extension (25, 26) au moins au nombre de un.

6. Support de charges selon l'une quelconque des revendications précédentes, **caractérisé en ce que** l'élément d'extension (25, 26) au moins au nombre de un comprend un témoin lumineux (23) et/ou un élément de support (19) prévu pour y déposer une charge.

7. Support de charges selon l'une quelconque des revendications précédentes, **caractérisé en ce que** l'élément d'extension (25, 26) au moins au nombre de un est logé de manière mobile au niveau d'un support transversal (17) du support de charges (10), en particulier au niveau d'un support transversal (17) arrière éloigné le plus possible de la partie arrière (91) du véhicule (90) ou au niveau d'un support d'immatriculation (18), au moyen de l'ensemble de paliers (30, 60).

8. Support de charges selon l'une quelconque des revendications précédentes, **caractérisé en ce que** l'élément d'extension (25, 26) au moins au nombre de un repose, dans la position de rangement (S) au niveau d'un contour longitudinal, en particulier au niveau d'un support longitudinal (15), du support de charges (10), ledit contour longitudinal s'étendant dans la direction longitudinale (98) du véhicule (90) lorsque le support de charges (10) est utilisé, ou s'étend de manière parallèle par rapport audit contour longitudinal, et/ou **en ce que** l'élément d'extension (25, 26) au moins au nombre de un est disposé dans la position de rangement (S) essentiellement entre des contours longitudinaux s'étendant, lorsque le support de charges (10) est utilisé, dans la direction longitudinale (98) du véhicule (90), en particulier au niveau de supports longitudinaux (15), du support de charges (10).

9. Support de charges selon l'une quelconque des revendications précédentes, **caractérisé en ce que** l'axe de rotation de base (32, 62) s'étend à peu près de manière verticale, lorsque le support de charges (10) est disposé au niveau du véhicule (90).

10. Support de charges (10) selon l'une quelconque des revendications précédentes, **caractérisé en ce que** l'ensemble de paliers (30, 60) comprend au moins un palier coulissant (70) de sorte que l'élément d'extension (25, 26) au moins au nombre de un peut être déplacé par coulissement autour d'un axe coulissant (64) du palier coulissant (70) par rapport au support de base (11) ou par rapport à l'élément rapporté de charges (12).

11. Support de charges selon la revendication 10, **caractérisé en ce que** le palier coulissant au moins au nombre de un présente un logement télescopique, en particulier présentant une forme de poche, dans lequel peut être insérée par coulissement une section (28) de l'élément d'extension (25, 26) au moins au nombre de un.

12. Support de charges selon la revendication 10 ou 11, **caractérisé en ce qu'**un axe coulissant (64) du palier coulissant (70) au moins au nombre de l'ensemble de paliers (30, 60) s'étend à peu près de manière horizontale lorsque le support de charges (10) est disposé au niveau du véhicule (90).

13. Support de charges selon l'une quelconque des revendications précédentes, **caractérisé en ce qu'**il présente un entraînement (90) manuel et/ou motorisé, en particulier électrique et/ou fluidique, et/ou un mécanisme de transmission (77) servant à déplacer l'élément d'extension (25, 26) au moins au nombre de un par rapport à au moins un degré de liberté de mouvement entre la position d'utilisation (G) et la position de rangement (S).

14. Support de charges selon l'une quelconque des revendications précédentes, **caractérisé en ce qu'**il comprend un système de fixation servant à la fixation amovible du support de charges (10) au niveau du véhicule (90), en particulier au niveau d'un attelage de remorque du véhicule (90), ou un ensemble de paliers du véhicule (80) destiné à être logé de manière mobile en particulier à la manière d'un tiroir au niveau du véhicule (90).
